# EUROPEAN PATENT SPECIFICATION

(11) **EP 4 269 317 B1**
(45) Date of publication and mention of the grant of the patent: **04.03.2026**
(21) Application number: 22170696.3
(22) Date of filing: 29.04.2022
(51) Int. Cl.: B66C 13/14, E02F 9/22, F16L 57/02

(54) **CRANE TIP AND CONNECTION ARRANGEMENT**
KRANSPITZE UND VERBINDUNGSANORDNUNG
EXTRÉMITÉ DE GRUE ET AGENCEMENT DE CONNEXION

(43) Date of publication of application: 01.11.2023
(73) Proprietor: Deere & Company, Moline, IL 61265 (US)
(72) Inventor: JARKKO, JOKINEN, 68163 Mannheim (DE); VESANEN, PEKKA, 68163 Mannheim (DE); SUUTARI, MARKO, 68163 Mannheim (DE); KETOLA, ARI-PEKKA, 68163 Mannheim (DE); SAHOO, GHANASHYAM, 68163 Mannheim (DE)
(74) Representative: Reichert, Christian

(56) References cited:
- EP-A1- 1 580 159
- EP-A1- 2 558 399
- WO-A1-2017/217917

## Description

The invention is a crane tip setup and arrangement of connecting lines running from the crane tip to a device connected to the crane.

Cranes are comprising multiple booms in different setups. Cranes are used for attaching various devices and tools to be used by a crane operator. In the technical field of forestry vehicles cranes are used to attach and use harvester heads and grapples of various kinds. The devices need hydraulic and electric power together with signal lines for control, so that hydraulic hoses, electrical and signal lines must be provided.

In forestry these cranes are used to handle and load logs on a transport carrier or a bunk being a part of a forwarder vehicle. The grapple tool used for this work needs rotatability and an open-close-hold function. Forestry vehicles usually comprise a crane with a base boom, attached at a movable base to the vehicle frame, an inner or main boom, reaching out from the base boom and linked to an outer boom, and an extension boom, having an extendable arm with a boom tip.

EP2558399A1 shows a guide means which restricts the hoses in the transport and working position. This document discloses the preamble of claim 1.

These cranes are stowed in a transport position during driving of the vehicle and are used in a loading or working position during filling of the bunk. Especially in these positions the hoses and lines running from the boom to the tool or rotator are put under a high stress. This stress leads to a reduced lifetime and higher maintenance cost. The invention is solving this problem by the features of the main claim and the subsequent claims.

The invention comprises a crane tip and connection arrangement comprising a boom having a free end with a boom tip, the boom tip having two free end surfaces on each side of the boom extending in a vertical orientation, a shaft being connected to and between the free end surfaces, the shaft forming a horizontal axis at the boom tip, a link, movably coupled to the boom tip at the axis of the shaft, a rotator movably coupled to the link, at least one hydraulic hose and/or electric line running at least from the boom to the rotator, the hydraulic hose and/or electric line being connected to the rotator, a guide fixture, being fixedly connected to the boom, having a guide surface on an inner surface being opposed to the shaft axis, the hydraulic hose and/or electric line being routed on the guide surface of the guide fixture between a space of the shaft and the link, the hydraulic hose running under the shaft and above the link in a vertical direction, wherein the connection between the hydraulic hose and/or electric line and the rotator is on an outside surface of the rotator opposite of the boom side.

The hoses and lines are directed by the guide fixture so that in a transport position and a working position as well as a transition between them the hoses and lines can move away from the boom and have enough play to unfold away from the boom. Also, in an extreme position of the link relative to the boom, being very large or very small angles between the link and the boom, the hoses and lines are provided with enough sag or with enough play to ensure a stress reduced state. The hoses and lines have a preconditioned length so that the guide fixture ensures that the initial length and the movement of the lines and hoses is not obstructed by the boom and the shaft and does not induce stress in the connection to the rotator or attached tool. The fixedly attached guide fixture ensures that it does not entangle the lines or hoses or enforces a bend or damage of these during any transition or movement of the hoses or electric lines.

In a further embodiment, the guide surface comprises a spherical shape.

The spherical shape ensures a constant oriented support of the hoses and lines so that these can freely extend in an outward way to prevent any bending or damage.

With another embodiment, the link comprises two tabs for being connected to the shaft and the guide fixture is connected to the axis of the shaft being inside between the tabs of the link in an axial direction.

The two tabs provide an optimal attachment to the link. The arrangement of the guide fixture enables the hoses or lines to be guided in a mid-area of the link and the shaft so that enough room for movement is provided.

By another embodiment, the guide fixture is movably connected to the shaft.

The guide fixture is connected on its left and right side being oriented against the free end surfaces of the boom. This arrangement allows an easy and reliable mounting of the guide fixture during assembly.

The guide fixture is in a first step movably connected to the boom and then afterwards fixedly connected to the boom by an additional means. This enables a time saving mounting and assembly process. The fixed connection to the boom enables the lines and hoses to be able to move freely during the usage of the crane so that any damage or wear is reduced at their surface. This further improves the life span and the maintenance time.

The claimed embodiment comprises a bolt or pin in the boom to rotatably fix the position of the guide fixture.

The bolt can be easily attached to both, guide fixture and boom so that the assembly process can be done in a timely manner and reduced work time. Also the arrangement guides the existing forces during usage of the crane into the boom and reduces stress on the guide fixture.

A further embodiment comprises a sleeve surrounding the shaft so that the guide fixture is contacting the sleeve.

The sleeve provides environmental protection to the shaft and prevents any damage of the shaft from the guide fixture. The surface of the shaft can thus be treated with a coating which is safely kept without any scratches or wear from the guide fixture. The sleeve can be easily exchanged in case of maintenance, so that durability of the shaft and maintenance times are improved.

In another embodiment the guide surface is at a constant distance to the shaft in an axial direction.

The guide surface enables the hoses and lines to keep a constant radius or distance against the shaft. This supports the free movement of the hoses and lines without getting unnecessarily squeezed or bend during usage of the crane. This improves lifetime and reduces maintenance work and cost.

In a further embodiment the guide fixture has an additional bulge on its outside end, pointing away from the boom, to protect the hose and/or line from damage.

The free end is in regular contact with the outer surface of the lines and hoses. Providing a bulge or rounded surface at the end enables the lines and hoses to have surface contact without wear or tearing material.

Another embodiment comprises a thickening sleeve on the inside of the free end surfaces to prevent the link from coming into contact with the boom.

The thickening sleeve enable a contact surface for the tabs of the link which ensures a safe transfer of the forces during use in the axial direction.

The invention is further described in the following figures, wherein
Figure 1 shows an embodiment of the arrangement;
Figure 2 shows a detail of an embodiment in exploded view of the arrangement;
Figure 3 depicts a detail of an embodiment of the guide fixture.

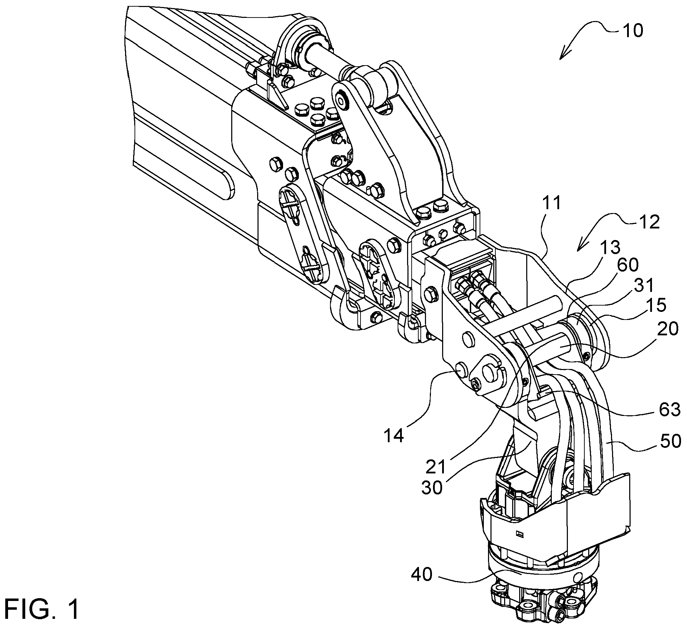

Fig. 1 shows an embodiment of the complete arrangement. It comprises a boom 10, being part of a crane assembly. The crane can comprise of multiple different booms which can provide different functions such as up and down movement or an extension movement of the crane or boom tip 12.

The boom 10 has a free end 11, being the boom tip 12 of the complete crane assembly. The boom tip 12 is used to attach and carry tools on the boom 10. The boom tip 12 comprises two free tabs which provide two free end surfaces 13 which are oriented in a vertical direction when the boom 10 is attached to the vehicle. The free end surfaces 13 are oriented to an inside direction of the boom tip 12 so that these are facing each other with a distance between them. In the space between the free end surface 13, a shaft 20 is fixed between the free end surfaces 13 and attached to the boom tip 12 in a horizontal orientation, so that the center axis of the shaft 20 is in a horizontal orientation, when the boom 10 is attached to the vehicle. The shaft 20 can be welded or otherwise fixed to the boom 10. In this embodiment the shaft 20 is removably fixed by brackets on an outside surface of the boom tip 12. The brackets are itself additionally fixed by a bolt. The kind of fixation of the shaft 20 is not relevant to this embodiment as long as the shaft 20 is not able to move in an axial direction.

The shaft 20 carries a link 30 which is connected rotatably to the shaft 20 by two tabs 31 on a left and right side of the boom tip 12 being inside between the free end surfaces 13. The lower end of the link 30 has a bore which center axis is oriented in a perpendicular to the center axis of the shaft 20. The link 30 provides two axis or rotation, being around the axis of the shaft 20 and around the axis of the bore relative to the boom tip 12.

The link 30 is also connected rotatably to a rotator 40. The rotator 40 provides a control for the rotation of a tool being further attached to the rotator 40. The rotator 40 is controllable by hydraulic pressure so that hydraulic pressure lines 50 must be connected to it. Rotators also can be provided with electrical signals so that electrical lines 50 also need to be provided. Apart from the supply to the rotator 40 itself, the attachable tool might need hydraulic and electric power or sensor lines 50 for the ordinary use during harvesting, felling, loading or similar tasks.

The connection to the rotator 40 is usually made by a bolt or pin. Principally any kind of connection is possible which enables rotation of the link 30 relative to the rotator 40 and is replaceable

The guide fixture 60 is attached by two bores around its sides to the shaft 20. The guide fixture 60 also comprises two tabs on its two sides which are next to the inside of the tabs of the link 30 in the mounted state. The guide fixture 60 has an inner surface 62 which is facing the shaft 20 so that a space for the hoses or electric lines 50 is provided between the lower half of the shaft 20 and the inner surface 62 of the guide fixture 60.

The hoses or electric lines 50 are usually extending from a front surface of the boom tip area and lead to the rotator 40 which provides connections for the hydraulic pressure. The hoses or electric lines 50 are guided from the front surface of the boom tip 12 between the shaft 20 and the inner surface 62 of the guide fixture 60. This enables to guide the hoses or electric lines 50 between the shaft 20 and the link 30 so that the hoses or electric lines 50 emerge from the boom tip 12 in an upward direction and also in an outward direction away from the boom tip 12 when the boom 10 is attached to the vehicle.

The guide fixture 60 is held by the bores around the shaft 20 but is also fixed in a nonrotatable manner. The guide fixture 60 is therefore attached by a bolt or pin 14 on the boom tip 12 to block any movement around the axis of the shaft 20. Further, the guide fixture 60 has a bulge 63 on its outside edge pointing away from the boom tip 12. This bulge 63 prevents any damage or wear on the hoses or electric lines 50 that could lead to a critical failure of the hoses or electric lines 50 and minimizes maintenance effort and extend the lifespan of the hoses or electric lines 50.

The shaft 20 is further surrounded by a sleeve 21. The sleeve 21 protects the shaft 20 from wear of the mounted guide fixture 60. The sleeve 21 enables that any coating on the shaft 20 remains intact despite the guide fixture 60 having micromovement or pushing down on the shaft 20 due to the forces of the hoses or electric lines 50.

The boom tip 12 also comprises thickening sleeve 15 on the free end surfaces 13. The thickening sleeves 15 are preventing any contact between the free ends 11 of the boom tip 12 and the link 30 in that these are ensuring an axial distance in the direction of the axis of the shaft 20.

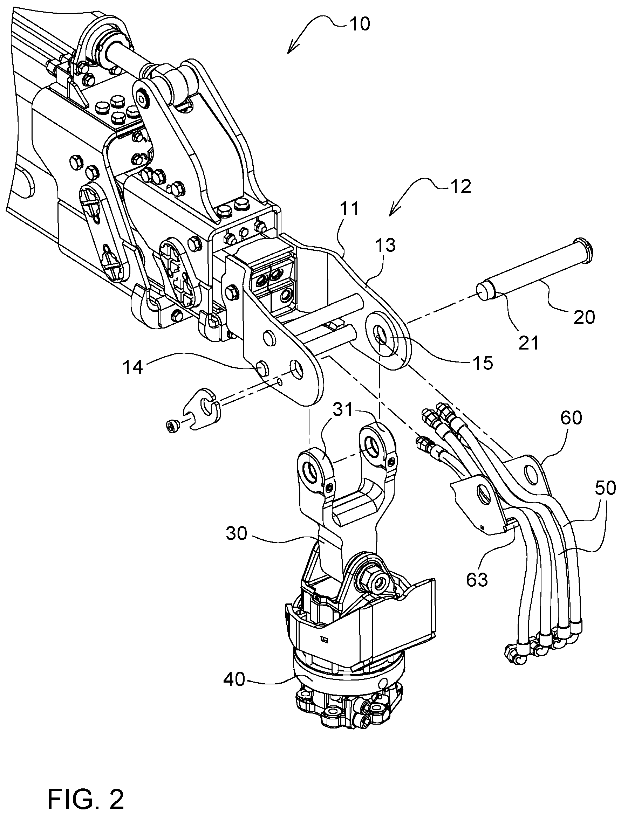

Fig. 2 shows an exploded view of an embodiment. The boom tip 12 and the free end 11 are provided with the thickening sleeve 15 on both inner sides of the free end surfaces 13 around the bores that hold the shaft 20 in place. The shaft 20 may be covered by a sleeve 21 which extends from one side of the shaft 20 to the other, especially along the area that will have circumferential contact to the guide fixture 60 and the guide fixtures 60 bores.

The shaft 20 may be additionally fixed in an axial direction by a holding means on an outer surface of the boom tip 12.

The link 30 is attached to the shaft 20 by the tabs 31 with bores which surround the shaft 20 in assembled state. The link 30 has a Y shape from a front side view and the two tabs 31 are separated from each other with a determined distance, so that the two tabs 31 are placed against the thickening sleeves 15 on the boom tip 12 in assembled state.

The guide fixture 60 is attached to the shaft 20 in the space between the tabs 31 of the link 30 in assembled state. This provides a fixed axial position on the shaft 20. The guide fixture 60 comprises two sides and a guide surface 61 which has contact to the hoses or electric lines 50. In assembled state the hoses or electric lines 50 are placed between the shaft 20 and the link 30 with the tabs 31. The hoses or electric lines 50 are connected to a front surface of the boom tip 12 providing a port for hydraulic pressure and/or electric signals or power.

The guide fixture 60 directs the hoses or electric lines 50 in an outward direction and also in an upward direction away from the link 30 and the rotator 40. This ensures that the hoses or electric lines 50 do not get pinched or bend by contact with the boom tip 12, the link 30, the rotator 40 or the attached tool.

In a transport position the link 30 is folded over together with the rotator 40 and the attached tool, so that the link 30 rests on top of the boom tip 12 as seen in Fig. 2. In this position the hoses or electric lines 50 are forming a U-shaped bend. In order to compensate for this necessary routing, the hoses or electric lines 50 are mounted in the necessary length. In working position this additional length is routed by the guide fixture 60 through the shape of the inner surface 62 so that the hoses or electric lines 50 are not in the way of movement of the boom 10, the link 30, the rotator 40, or the attached tool. As the guide fixture 60 is in a fixed position, both axially and rotationally, the initial start from the transport position does not influence the movement of the hoses or electric lines 50 to follow the movement of the link 30 and the rotator 40 so that bending or damage is prevented.

In the working process as the load bunk becomes loaded with logs, the angle between the link 30 together with the rotator 40 and the boom tip 12 becomes smaller as the boom tip 12 has to reach a higher loading position. In an extreme case, the link 30 would contact the underside of the boom tip 12 in Fig. 2. This stretches the hoses or lines 50 in a U-shape that is formed around the guide fixture 60. The additional length is already included in the hoses or electric lines 50 yet stretches these over the outer edge of the guide fixture 60. The bulge 63 at the outer end of the guide fixture 60 prevents a bending or cutting into the hoses or electric lines 50 so that these can freely move around the guide fixture 60 without overstretching and damaging the material. As the guide fixture 60 is fixed rotationally, it will not become an obstacle for the hoses or electric lines 50 but provide a compensational routing due to the inner surface 62 when the boom tip 12 is moved from the high work position to a lower one or from the work position into the transport position.

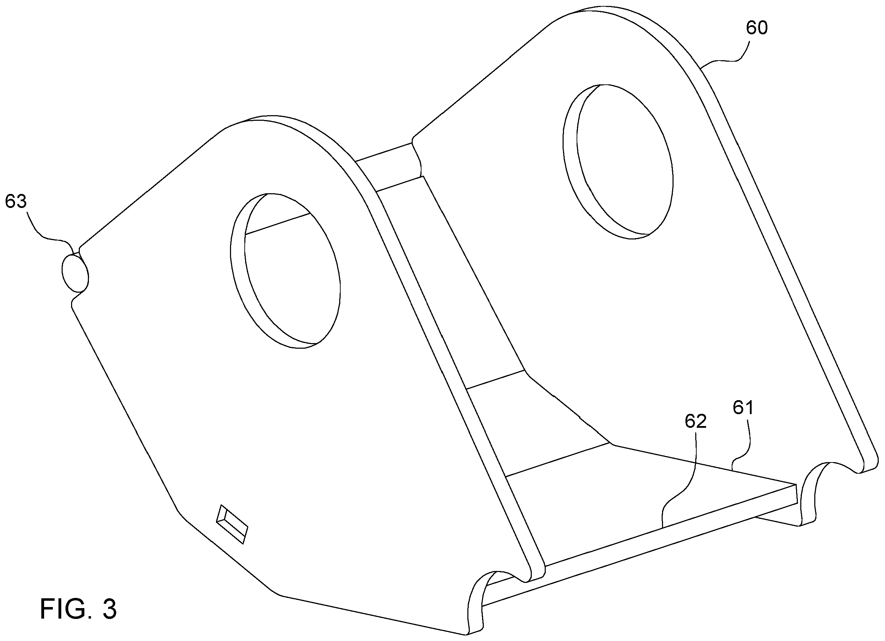

Fig. 3 show a detail of an embodiment of the guide fixture 60. It has a hollow structure with a bend inner surface 62, and two side surfaces The side surfaces comprise bores which are dimensioned so that the guide fixture 60 can be mounted on the shaft 20 and a sleeve 21 surrounding the shaft 20. On one side, which corresponds to an outer end being oriented away from the boom tip 12 in assembled state, a bulge 63 is provided. The bulge 63 can be a metal cylinder welded to the guide fixture 60 but may also be included in the guide fixture 60 itself, like a rounded or deep drawn edge on the guide fixture 60.

On the other end, being oriented towards the boom tip 12 in the assembled state, the guide fixture 60 has a cut out in its side walls. This cut out is corresponding to the position of a pin or bolt 14 which is fixed in the boom tip 12. Together with the fixation around the shaft 20, the guide fixture 60 is position in a non-rotational way to the boom tip 12 which prevents any interference with the hoses or electric lines 50. The cut out can be replace by a bore so that the pin or bolt 14 can be inserted through the bore to stop rotation.

The inner surface 62 has a bend shape, or also a spherical shape to enable the hoses or electric lines 50 to extend into the bowl of the guide fixture 60 to compensate length demand of the hoses or electric lines 50 during work, loading or transport position.

The guide fixture 60 therefore enables a routing of the hoses or electric lines 50, so that these do not become entangled, either at the vehicle, or with surrounding objects and at the same time prevents stress on the hoses or electric lines 50.

## Claims

1. Crane tip and connection arrangement comprising
a boom (10) having a free end (11) with a boom tip (12),
the boom tip (12) having two free end surfaces (13) on each side of the boom (10) extending in a vertical orientation,
a shaft (20) being connected to and between the free end surfaces (13), the shaft (20) forming a horizontal axis at the boom tip (12),
a link (30), movably coupled to the boom tip (12) at the axis of the shaft (20),
a rotator (40), movably coupled to the link (30),
at least one hydraulic hose and/or electric line (50) running at least from the boom (10) to the rotator (40),
the hydraulic hose and/or electric line (50) being connected to the rotator (40),
a guide fixture (60), being fixedly connected to the boom (10), having a guide surface (61) on an inner surface (62) being opposed to the shaft axis,
the hydraulic hose and/or electric line (50) being routed on the guide surface (61) of the guide fixture (60) between a space of the shaft (20) and the link (30),
the hydraulic hose and/or electric line (50) running under the shaft (20) and above the link (30) in a vertical direction,
wherein the connection between the hydraulic hose and/or electric line (50) and the rotator (40) is on an outside surface of the rotator (40) opposite of the boom side
**characterized in that** the guide fixture comprises a bolt (14) or pin in the boom (10) to rotatably fix the position of the guide fixture (60).

2. Crane tip and connection arrangement of claim 1, wherein the guide surface (61) comprises a spherical shape.

3. Crane tip and connection arrangement of any of the preceding claims, wherein the link (30) comprises two tabs (31) for being connected to the shaft (20) and the guide fixture (60) is connected to the axis of the shaft (20) being inside between the tabs (31) of the link (30) in an axial direction.

4. Crane tip and connection arrangement of any of the preceding claims, wherein the guide fixture (60) is movably connected to the shaft (20).

5. Crane tip and connection arrangement of any of the preceding claims, comprising a sleeve (21) surrounding the shaft (20) so that the guide fixture (60) is contacting the sleeve (21).

6. Crane tip and connection arrangement of any of the preceding claims, wherein the guide surface (61) is at a constant distance to the shaft (20) in an axial direction.

7. Crane tip and connection arrangement of any of the preceding claims, wherein the guide fixture (60) has an additional bulge (63) on its outside end, pointing away from the boom (10), to protect the hose and/or line (50) from damage.

8. Crane tip and connection arrangement of any of the preceding claims, comprising a thickening sleeve (15) on the inside of the free end surfaces (13) to prevent the link (30) from coming into contact with the boom (10).

## Patentansprüche

1. Kranspitzen- und Verbindungsanordnung, die Folgendes umfasst:
einen Ausleger (10) mit einem freien Ende (11) mit einer Auslegerspitze (12),
wobei die Auslegerspitze (12) zwei freie Endflächen (13) auf jeder Seite des Auslegers (10) aufweist, die sich in einer vertikalen Ausrichtung erstrecken,
eine Welle (20), die mit den freien Endflächen (13) und zwischen diesen verbunden ist, wobei die Welle (20) eine horizontale Achse an der Auslegerspitze (12) bildet,
ein Verbindungsstück (30), das an der Achse der Welle (20) beweglich mit der Auslegerspitze (12) gekoppelt ist, einen Rotator (40), der beweglich mit dem Verbindungsstück (30) gekoppelt ist,
mindestens einen Hydraulikschlauch und/oder eine elektrische Leitung (50), der bzw. die mindestens von dem Ausleger (10) zu dem Rotator (40) verläuft,
wobei der Hydraulikschlauch und/oder die elektrische Leitung (50) mit dem Rotator (40) verbunden sind,
eine Führungsvorrichtung (60), die fest mit dem Ausleger (10) verbunden ist und eine Führungsfläche (61) an einer Innenfläche (62), die der Wellenachse gegenüberliegt, aufweist,
wobei der Hydraulikschlauch und/oder die elektrische Leitung (50) an der Führungsfläche (61) der Führungsvorrichtung (60) zwischen einem Zwischenraum der Welle (20) und dem Verbindungsstück (30) verlegt sind,
wobei der Hydraulikschlauch und/oder die elektrische Leitung (50) unter der Welle (20) und über dem Verbindungsstück (30) in einer vertikalen Richtung verlaufen,
wobei sich die Verbindung zwischen dem Hydraulikschlauch und/oder der elektrischen Leitung (50) und dem Rotator (40) auf einer der Auslegerseite gegenüberliegenden Außenfläche des Rotators (40) befindet,
**dadurch gekennzeichnet, dass** die Führungsvorrichtung einen Bolzen (14) oder Stift in dem Ausleger (10) zum drehbaren Fixieren der Position der Führungsvorrichtung (60) umfasst.

2. Kranspitzen- und Verbindungsanordnung nach Anspruch 1, wobei die Führungsfläche (61) eine sphärische Form umfasst.

3. Kranspitzen- und Verbindungsanordnung nach einem der vorhergehenden Ansprüche, wobei das Verbindungsstück (30) zwei Laschen (31) zur Verbindung mit der Welle (20) umfasst und die Führungsvorrichtung (60) mit der Achse der Welle (20), die sich in einer axialen Richtung zwischen den Laschen (31) des Verbindungsstücks (30) befindet, verbunden ist.

4. Kranspitzen- und Verbindungsanordnung nach einem der vorhergehenden Ansprüche, wobei die Führungsvorrichtung (60) beweglich mit der Welle (20) verbunden ist.

5. Kranspitzen- und Verbindungsanordnung nach einem der vorhergehenden Ansprüche, die eine Muffe (21) umfasst, die die Welle (20) umgibt, so dass die Führungsvorrichtung (60) die Muffe (21) berührt.

6. Kranspitzen- und Verbindungsanordnung nach einem der vorhergehenden Ansprüche, wobei sich die Führungsfläche (61) in einer axialen Richtung in einem konstanten Abstand zu der Welle (20) befindet.

7. Kranspitzen- und Verbindungsanordnung nach einem der vorhergehenden Ansprüche, wobei die Führungsvorrichtung (60) an ihrem von dem Ausleger (10) weg weisenden äußeren Ende einen zusätzlichen Wulst (63) aufweist, um den Schlauch und/oder die Leitung (50) vor Beschädigungen zu schützen.

8. Kranspitzen- und Verbindungsanordnung nach einem der vorhergehenden Ansprüche, die eine Verstärkungsmuffe (15) an der Innenseite der freien Endflächen (13) umfasst, um zu verhindern, dass das Verbindungsstück (30) mit dem Ausleger (10) in Kontakt kommt.

## Revendications

1. Extrémité de grue et agencement de connexion comprenant
une flèche (10) comprenant une extrémité libre (11) dotée d'une tête de flèche (12),
la tête de flèche (12) présentant deux surfaces d'extrémité libre (13) de chaque côté de la flèche (10) s'étendant dans une orientation verticale,
un arbre (20) relié aux et entre les surfaces d'extrémité libre (13), l'arbre (20) formant un axe horizontal au niveau de la tête de flèche (12),
une liaison (30), accouplée de manière mobile à la tête de flèche (12) au niveau de l'axe de l'arbre (20),
un dispositif de rotation (40), accouplé mobile à la liaison (30),
au moins un flexible hydraulique et/ou une ligne électrique (50) allant au moins de la flèche (10) au dispositif de rotation (40),
le flexible hydraulique et/ou la ligne électrique (50) étant reliés au dispositif de rotation (40),
un accessoire de guidage (60), relié de manière fixe à la flèche (10), présentant une surface de guidage (61) sur une surface intérieure (62) opposée à l'axe de l'arbre,
le flexible hydraulique et/ou la ligne électrique (50) passant sur la surface de guidage (61) de l'accessoire de guidage (60) entre un espace de l'arbre (20) et la liaison (30),
le flexible hydraulique et/ou la ligne électrique (50) passant sous l'arbre (20) et au-dessus de la liaison (30) selon une direction verticale,
le raccordement entre le flexible hydraulique et/ou la ligne électrique (50) et le dispositif de rotation (40) se faisant sur une surface extérieure du dispositif de rotation (40) opposée au côté flèche
**caractérisé en ce que** l'accessoire de guidage comprend un boulon (14) ou une broche dans la flèche (10) pour fixer en rotation la position de l'accessoire de guidage (60).

2. Extrémité de grue et agencement de connexion selon la revendication 1, la surface de guidage (61) présentant une forme sphérique.

3. Extrémité de grue et agencement de connexion selon l'une quelconque des revendications précédentes, la liaison (30) comprenant deux languettes (31) destinées à être reliées à l'arbre (20) et l'accessoire de guidage (60) étant relié à l'axe de l'arbre (20) situé à l'intérieur entre les languettes (31) de la liaison (30) dans une direction axiale.

4. Extrémité de grue et agencement de connexion selon l'une quelconque des revendications précédentes, l'accessoire de guidage (60) étant relié de manière mobile à l'arbre (20).

5. Extrémité de grue et agencement de connexion selon l'une quelconque des revendications précédentes, comprenant un manchon (21) entourant l'arbre (20) de sorte que l'accessoire de guidage (60) entre en contact avec le manchon (21).

6. Extrémité de grue et agencement de connexion selon l'une quelconque des revendications précédentes, la surface de guidage (61) se trouvant à une distance constante par rapport à l'arbre (20) dans une direction axiale.

7. Extrémité de grue et agencement de connexion selon l'une quelconque des revendications précédentes, l'accessoire de guidage (60) comprenant un renflement (63) supplémentaire sur son extrémité extérieure, dirigé à l'opposé de la flèche (10), pour protéger le flexible et/ou la ligne (50) contre les dommages.

8. Extrémité de grue et agencement de connexion selon l'une quelconque des revendications précédentes, comprenant un manchon d'épaississement (15) sur l'intérieur des surfaces d'extrémité libre (13) pour empêcher la liaison (30) d'entrer en contact avec la flèche (10).
